# EUROPEAN PATENT APPLICATION

(11) **EP 4 450 155 A1**
(43) Date of publication of application: **23.10.2024**
(21) Application number: 22907949.6
(22) Date of filing: 15.12.2022
(51) Int. Cl.: B01J 20/02, B01J 20/04, B01J 20/08, B01J 20/10, C02F 1/28, B01J 20/28, B01J 20/30

(54) **SODIUM ION ADSORBENT, PREPARATION METHOD THEREOF, AND METHOD OF REMOVING SODIUM ION**

(30) Priority: 17.12.2021 KR 20210181815
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: HAN, Gi-Chun, Cheongju-si, Chungcheongbuk-do 28661 (KR); KIM, Sang Won, Pohang-si, Gyeongsangbuk-do 37637 (KR); KIM, Seung Goo, Seoul 01780 (KR); LEE, Seung Seok, Pohang-si, Incheon 37673 (KR); KO, Young-Seon, Seoul 07694 (KR); SON, Young Geun, Pohang-si, Gyeongsangbuk-do 37669 (KR); JEUNG, Kee Uek, Pohang-si, Gyeongsangbuk-do 37656 (KR)
(74) Representative: Nederlandsch Octrooibureau
(86) International application number: PCT/KR2022/020403
(87) International publication number: WO 2023/113482

(57) **Abstract**

The present exemplary embodiments relate to a sodium ion adsorbent, a method of manufacturing the same, and a method for removing sodium ions.

According to an exemplary embodiment, a sodium ion adsorbent for removing sodium ions may include a compound represented by Chemical Formula 1 below. [Chemical Formula 1] HₓM₁₋ₓAlSi₂O₆, in Chemical Formula 1, M is one or more elements selected from Na, K, Cs, and Rb, and 0<x≤1.

## Description

### [Technical Field]

The present exemplary embodiments relate to a sodium ion adsorbent that selectively removes sodium ions from a solution containing sodium ions and heterogeneous ions, a method for manufacturing the same, and a method for removing sodium ions.

### [Background Art]

In recovering valuable elements in a solution, sodium ions act as impurities. For example, in a case where Na and K are dissolved, when recovering economically valuable K, Na should be removed because Na acts as an impurity to make a recovered K compound worthless.

Generally, examples of a method for removing ions in a solution include a precipitation method, an adsorption method, an ion exchange resin method, and a membrane method.

For sodium ions, the precipitation method is rarely used because the solubility of salts containing sodium is generally very high.

Some research is being conducted on the adsorption, ion exchange resin, and membrane methods, but their use is limited due to their low selectivity for sodium ions and high manufacturing and operating costs.

Therefore, there is a need for an economical method that can selectively remove sodium ions in a solution.

### [Disclosure]

### [Technical Problem]

As discussed above, the present exemplary embodiment attempts to provide a sodium ion adsorbent that can selectively remove sodium ions from a solution containing sodium ions and heterogeneous ions, and a method for manufacturing the same.

In addition, the present exemplary embodiment attempts to provide a method for selectively removing sodium ions from a solution containing sodium ions and heterogeneous ions using an adsorbent that can selectively remove sodium ions.

### [Technical Solution]

A sodium ion adsorbent according to an exemplary embodiment may include a compound represented by Chemical Formula 1 below.

[Chemical Formula 1] HₓM₁₋ₓAlSi₂O₆

In Chemical Formula 1, M is one or more elements selected from Na, K, Cs, and Rb, and 0<x≤1.

The adsorbent can selectively adsorb sodium ions in a solution, and an average particle diameter (D50) of the adsorbent may be within a range of 10 µm to 300 µm.

In addition, an exemplary embodiment of the present invention may provide a method for manufacturing a sodium ion adsorbent including a compound represented by Chemical Formula 1, the method including obtaining an adsorbent by subjecting a mineral to a multistage treatment; and separating the obtained adsorbent.

The obtaining an adsorbent by subjecting a mineral to a multistage treatment may include obtaining a first solid by heat-treating the mineral at a high temperature; obtaining a second solid by treating the obtained first solid with an acid; and subjecting the obtained second solid to a cleaning treatment.

The obtaining a first solid by heat-treating the mineral at a high temperature may be performed at a temperature ranging from 1000°C to 1200°C.

In addition, the obtaining a second solid by treating the obtained first solid with an acid may include mixing the first solid with an acid and may be performed at a temperature ranging from 150°C to 300°C.

In addition, the obtaining a second solid by treating the obtained first solid with an acid may include mixing the first solid with an acid, and the acid may be mixed within a range of 10 wt% to 40 wt% based on a weight of the first solid.

The subjecting the obtained second solid to a cleaning treatment may include a water cleaning treatment and a base cleaning treatment.

In addition, an exemplary embodiment of the present invention may provide a method for removing sodium ions, including adding an adsorbent including a compound represented by Chemical Formula 1 to a sodium ion-containing solution; adsorbing sodium ions to the adsorbent while stirring the solution with the adsorbent added thereto; and separating the sodium ion adsorbent with the sodium ions adsorbed thereto from the solution.

The adsorbing sodium ions to the sodium ion adsorbent while stirring the solution with the adsorbent added thereto may be performed at a temperature ranging from 30°C to 95°C.

In addition, in the adsorbing sodium ions to the sodium ion adsorbent while stirring the solution with the adsorbent added thereto, pH of the solution with the adsorbent added thereto may be 7 or higher.

### [Advantageous Effects]

According to the present exemplary embodiment, a sodium ion adsorbent that can selectively remove sodium ions is manufactured using a mineral, which is advantageous from an economic perspective.

Sodium ions are selectively removed from a solution containing sodium ions and heterogeneous ions, and thus, for a solution containing lithium, the loss of lithium can be reduced and a high concentration of lithium can be provided to a subsequent lithium using process.

### [Description of the Drawings]

FIG. 1 shows a method for manufacturing a sodium ion adsorbent according to an exemplary embodiment.
FIG. 2 shows a result of an XRD analysis of a sodium ion adsorbent prepared according to an exemplary embodiment.

### [Mode for Invention]

The terms such as first, second and third are used for describing, but are not limited to, various parts, components, regions, layers, and/or sections. These terms are used only to discriminate one part, component, region, layer or section from another part, component, region, layer or section. Therefore, a first part, component, region, layer or section described below may be referred to as a second part, component, region, layer or section without departing from the scope of the present invention.

The technical terms used herein are set forth only to mention specific exemplary embodiments and are not intended to limit the present invention. Singular forms used herein are intended to include the plural forms as long as phrases do not clearly indicate an opposite meaning. In the present specification, the term "including" is intended to embody specific characteristics, regions, integers, steps, operations, elements and/or components, but is not intended to exclude presence or addition of other characteristics, regions, integers, steps, operations, elements, and/or components.

When a part is referred to as being "above" or "on" another part, it may be directly above or on the other part or an intervening part may also be present. In contrast, when a part is referred to as being "directly above" another part, there is no intervening part present.

Unless otherwise defined, all terms including technical and scientific terms used herein have the same meanings as the meanings generally understood by one skilled in the art to which the present invention pertains. Terms, such as those defined in commonly used dictionaries, are to be interpreted as having meanings consistent with the relevant technical literature and the present disclosure, and are not to be interpreted as having idealized or overly formal meanings unless expressly so defined herein.

Hereinafter, an exemplary embodiment of the present invention will be described in detail. However, the exemplary embodiment is only provided by way of example, and the present invention is not limited thereto, but is defined by the scope of the claims described later.

An exemplary embodiment of the present invention may provide a sodium ion adsorbent that selectively removes sodium ions from a solution containing sodium ions.

Unless otherwise described throughout the specification of the present invention, the adsorbent refers to a sodium ion adsorbent.

The sodium ion adsorbent according to an exemplary embodiment includes a compound including an alkali element, aluminum, and silicon, and represented by Chemical Formula 1.

[Chemical Formula 1] HₓM₁₋ₓAlSi₂O₆

in Chemical Formula 1,
M is one or more elements selected from Na, K, Cs, and Rb, and
0<x≤1.

The compound represented by Chemical Formula 1 exhibits excellent adsorption selectivity for sodium ions. The compound represented by Chemical Formula 1 may be used as a sodium ion adsorbent that can effectively recover sodium ions contained in an aqueous source such as seawater and brine.

The compound represented by Chemical Formula 1 may be obtained through recycling of a residual mineral produced after extracting lithium from a raw mineral containing lithium, such as spodumene.

Note that an average particle diameter (D50) of the sodium ion adsorbent may be within a range of 1 µm to 400 µm, and specifically 10 µm to 300 µm. If the average particle diameter (D50) is below the above range, there is a problem in that solid-liquid separation is difficult in a process of separating the adsorbent with sodium ions adsorbed thereto. In addition, if the particle diameter is above the above range, there is a problem in that a specific surface area of the adsorbent decreases and a sodium ion adsorption performance deteriorates.

Another exemplary embodiment of the present invention may provide a method for manufacturing a sodium ion adsorbent.

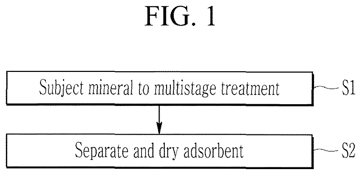

FIG. 1 shows a method for manufacturing a sodium ion adsorbent according to an exemplary embodiment. Specifically, a method for manufacturing the compound represented by Chemical Formula 1 is shown.

Referring to FIG. 1, the method for manufacturing a sodium ion adsorbent according to an exemplary embodiment may include a first step (S1) of obtaining a sodium ion adsorbent by subjecting a mineral to a multistage treatment; and a second step (S2) of separating the obtained sodium ion adsorbent.

Here, the mineral may be a residual mineral produced after extracting lithium from a raw mineral containing lithium, such as spodumene.

According to an exemplary embodiment of the present invention, a sodium ion adsorbent including a compound represented by Chemical Formula 1 may be manufactured.

[Chemical Formula 1] HₓM₁₋ₓAlSi₂O₆

in Chemical Formula 1,
M is one or more elements selected from Na, K, Cs, and Rb, and
0<x≤1.

In addition, the first step (S1) of obtaining a sodium ion adsorbent by subjecting a mineral to a multistage treatment may include a step of obtaining a first solid by heat-treating the mineral at a high temperature; a step of obtaining a second solid by treating the obtained first solid with an acid; and a step of subjecting the obtained second solid to a cleaning treatment.

First, in the step of obtaining a first solid by heat-treating the mineral at a high temperature, the mineral prepared to have a predetermined particle size may be heated at a temperature ranging from 1000°C to 1200°C. However, the present invention is not limited to the above temperature range. If the high-temperature heat treatment temperature is below the above temperature range, impurities in the mineral may not be sufficiently removed, which may affect the performance of the manufactured adsorbent. In addition, if the high-temperature heat treatment temperature is above the above temperature range, there is a problem in that chemical components in the mineral undergo a chemical reaction at high temperature to deteriorate the adsorption performance of the manufactured adsorbent.

Additionally, the high-temperature heat treatment may be performed for 30 minutes or longer, and specifically within a range of 30 minutes to 3 hours. However, the present invention is not limited to the above time range. If the high-temperature heat treatment time is too short, impurities in the mineral are not sufficiently removed, and if the high-temperature heat treatment time is too long, chemical components in the mineral may undergo a chemical reaction at high temperatures, leading to deterioration in the adsorption performance of the manufactured adsorbent.

Note that in the step of obtaining a first solid by heat-treating the mineral at a high temperature, the mineral used as a raw material may be prepared to have a predetermined particle size. An average particle diameter (D50) of the mineral may be 1 µm to 10 mm, and specifically 1 µm to 1000 µm. However, the present invention is not limited thereto.

Then, in the step of obtaining a second solid by treating the obtained first solid with an acid, the obtained first solid may be mixed with an acid.

In the step of obtaining a first solid by heat-treating the mineral at a high temperature, the obtained first solid is cooled and then mixed with an acid. The acid may be mixed within a range of 10 wt% to 40 wt%, and specifically 20 wt% to 30 wt%, based on a weight of the first solid. However, the present invention is not limited to the above range.

In addition, the acid may be sulfuric acid (H₂SO₄), and may react for 30 minutes or longer.

The mixture of the first solid and the acid may be subjected to an acid treatment at a temperature ranging from 150°C to 350°C, and specifically from 200°C to 300°C. If the acid treatment temperature is below the above temperature range, ion exchange between lithium in the first solid, that is, the mineral from which impurities have been removed, and hydrogen in sulfuric acid may not occur properly, which may affect the performance of the manufactured adsorbent. In addition, if the acid treatment temperature is above the above temperature range, there is a problem in that the chemical components in the mineral undergo a chemical reaction with sulfuric acid, leading to deterioration in the adsorption performance of the manufactured adsorbent.

Additionally, a stirring member may be provided to stir the mixture of the first solid and the acid.

Then, a step of subjecting the second solid to a cleaning treatment may be performed.

The second solid may be mixed with water and subjected to a cleaning treatment.

In this case, the water may be mixed at 100 wt% to 1000 wt% based on a weight of the second solid, and stirring may be performed using a stirring member. Here, lithium contained in the second solid may be dissolved in the water.

Additionally, Ca(OH)₂ may be added to adjust pH of the aqueous solution in which the second solid and water are mixed. The Ca(OH)₂ added can reduce Al and Si ions dissolved together with lithium contained in the aqueous solution.

The pH can be adjusted to a range of 4 to 10. If the pH is below the above pH range, there is a problem in that the adsorbent may dissolve. In addition, if the pH is above the pH range, the consumption of alkaline solution increases, which reduces economic efficiency.

A sodium ion adsorbent is manufactured through the above cleaning treatment.

Next, a second step (S2) of separating and drying the obtained sodium ion adsorbent may be performed.

The sodium ion adsorbent may be separated from the solution through centrifugation or filtration.

The separated sodium ion adsorbent may be further subjected to a water cleaning treatment. In this case, the cleaning may be performed while mixing water three times or more than a weight of the sodium ion adsorbent.

The sodium ion adsorbent subjected to the water cleaning treatment may be dried under temperature conditions, and the drying temperature may be within a range of 30°C to 100°C.

The dried sodium ion adsorbent may be subjected to a further pulverization operation, whereby a sodium ion adsorbent having a predetermined particle size range may be manufactured.

Another exemplary embodiment of the present invention may provide a method for removing sodium ions from a solution containing sodium ions using a sodium ion adsorbent. Specifically, a method for selectively removing sodium ions from a solution containing sodium ions may be provided.

According to an exemplary embodiment, sodium ions may be selectively removed from a sodium ion-containing solution using a sodium ion adsorbent represented by Chemical Formula 1 below.

[Chemical Formula 1] HₓM₁₋ₓAlSi₂O₆

in Chemical Formula 1,
M is one or more elements selected from Na, K, Cs, and Rb, and
0<x≤1.

The method for removing sodium ions according to an exemplary embodiment may include a step of adding a sodium ion adsorbent to a sodium ion-containing solution; a step of adsorbing sodium ions to the sodium ion adsorbent while stirring the solution with the sodium ion adsorbent added thereto; and a step of separating the sodium ion adsorbent with the sodium ions adsorbed thereto from the solution.

In the step of adding a sodium ion adsorbent to the sodium ion-containing solution, a sodium ion concentration in the solution may be 0.01 g/L to 130 g/L, and specifically 0.1 g/L to 10 g/L.

Additionally, the sodium ion-containing solution may additionally contain one or more ions selected from calcium ions, magnesium ions, iron ions, and manganese ions. The ions may be present in the solution at a concentration ranging from 0.1 g/L to 10 g/L.

After the adsorbent is added to the sodium ion-containing solution, the sodium ions may be adsorbed to the sodium ion adsorbent while stirring. In this case, a stirring rate may be within a range of 200 rpm to 500 rpm, and specifically 250 rpm to 350 rpm. When the stirring rate is within the above range, the sodium ion removal efficiency of the adsorbent is excellent.

Note that, after adding a sodium ion adsorbent to the sodium ion-containing solution, the sodium ions can be adsorbed to the adsorbent while stirring under heating conditions. In this case, the heating temperature may be within a range of 30°C to 90°C, and specifically 70°C to 90°C. When the heating temperature is within the above range, the selective adsorption efficiency of the adsorbent for sodium ions in the sodium-containing solution is excellent.

In addition, pH of a solution in which the sodium ion-containing solution and the adsorbent are mixed may be 7 or more, and specifically may be within a range of more than 7 and 14 or less. This is because the adsorption mechanism is ion exchange of H+ of the adsorbent and Na+ in the solution and when the solution maintains alkalinity, it is advantageous for the sodium ion adsorption reaction.

### DETAILED DESCRIPTION OF THE EMBODIMENTS

Hereinafter, Examples of the present invention will be described in detail. However, the Examples are only provided by way of example, and the present invention is not limited thereto, but is defined by the scope of the claims described later.

### Preparation Example 1

100 g of a mineral containing spodumene was placed in a crucible, heat-treated at 1,100°C for 1 hour, and then air cooled. The heat treatment product and sulfuric acid (98%) were mixed at a weight ratio of 100:23, and subjected to heat treatment at 250°C for 1 hour, and a solid was separated.

The solid separated after the heat treatment and distilled water were mixed at a weight ratio of 1:2 and stirred. After 10 minutes of stirring, solid powder of Ca(OH)₂ of 10% of the weight of the solid was added and stirred for 20 minutes, and then solid and liquid were separated. The separated solid was cleaned using distilled water three times or more than the weight of the solid. Next, the solid was separated and dried at 45°C to a constant weight to prepare a sodium ion adsorbent.

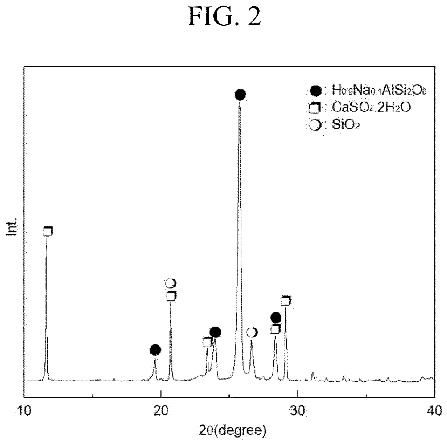

An XRD analysis result of the prepared adsorbent is shown in FIG. 2.

Referring to FIG. 2, it can be confirmed that H_{0.9}Na_{0.1}AlSi₂O₆ was prepared.

### Example 1

A stock solution with a sodium ion concentration of 192 mg/L was prepared using sodium hydroxide.

4 g of the sodium ion adsorbent prepared in Preparation Example 1 was added to 400 mL of the stock solution, which was then stirred at 300 rpm.

After stirring for a certain period of time under predetermined temperature conditions, a sample was collected, solid and liquid were separated, and a sodium ion concentration in the solution was measured.

When the temperature was 30°C, 50°C, 70°C, and 90°C and the stirring time was 3 hours, 5 hours, and 7 hours, the sodium ion concentrations in the collected solution are shown in Table 1.

**(Table 1)**

| (unit: mg/L) | | | | |
|---|---|---|---|---|
| Classification | Temperature (°C) | | | |
| | 30 | 50 | 70 | 90 |
| 3 hrs | 192 | 191 | 175 | 96 |
| 5 hrs | 192 | 186 | 163 | 79 |
| 7 hrs | 192 | 185 | 151 | 77 |

Referring to Table 1, it can be seen that the sodium ion concentration changes little at 30°C and 50°C. Additionally, at 70°C, the sodium ion concentration tended to decrease as the stirring time increased. When stirred for 7 hours, the sodium ion concentration decreased to 151 mg/L, confirming that about 21% of the sodium ions in the stock solution were removed. In addition, at 90°C, after stirring was performed for 3 hours, the sodium ion concentration in the solution decreased to 96 mg/L, and when stirring was performed for 7 hours, the sodium ion concentration became 77 mg/L, confirming that about 60% of the sodium ions in the stock solution were removed.

Therefore, it can be confirmed that sodium ions in the solution can be effectively removed using the adsorbent prepared in Preparation Example 1.

### Example 2

A stock solution with sodium and potassium ion concentrations of 189 mg/L and 198 mg/L, respectively, was prepared.

4 g of the adsorbent prepared in Preparation Example 1 was added to 400 mL of the stock solution, which was then stirred at 300 rpm.

After stirring for a certain period of time under predetermined temperature conditions, a sample was collected, solid and liquid were separated, and a sodium ion concentration in the solution was measured.

When the temperature was 30°C, 50°C, 70°C, and 90°C and the stirring time was 3 hours, 5 hours, and 7 hours, the sodium ion concentrations in the collected solution are shown in Table 2.

**(Table 2)**

| | | Ion concentration in solution (mg/L) | |
|---|---|---|---|
| | | Na | K |
| 30°C | 3 hrs | 189 | 198 |
| | 5 hrs | 190 | 197 |
| | 7 hrs | 189 | 198 |
| 50°C | 3 hrs | 185 | 197 |
| | 5 hrs | 184 | 198 |
| | 7 hrs | 183 | 198 |
| 70°C | 3 hrs | 181 | 197 |
| | 5 hrs | 174 | 195 |
| | 7 hrs | 165 | 197 |
| 90°C | 3 hrs | 114 | 191 |
| | 5 hrs | 81 | 195 |
| | 7 hrs | 63 | 194 |

Referring to Table 2, it can be seen that the sodium ion concentration changes little at 30°C and 50°C. However, at 70°C, the sodium ion concentration decreased as the stirring time increased, and when stirring was performed for 7 hours, the sodium ion concentration decreased to 165 mg/L, confirming that about 12% of the sodium ions in the stock solution were removed. At this time, the potassium ion concentration changed little, confirming that sodium ions in the stock solution were selectively removed.

In addition, at 90°C, the sodium ion concentration decreased to 114 mg/L after 3 hours, and the decrease in sodium ion concentration increased as the stirring time increased. When the stirring time was 7 hours, the sodium ion concentration in the solution was 63 mg/L, confirming that about 66% of the sodium ions in the stock solution were removed. On the other hand, the potassium ion concentration changed little, confirming that sodium ions could be effectively selected and removed.

It will be understood by one skilled in the art to which the present invention belongs that the present invention is not limited to the above exemplary embodiments, but can be manufactured in a variety of different forms, and can be implemented in other specific forms without changing the technical spirit or essential features of the present invention. Therefore, the exemplary embodiments described above should be understood as illustrative in all respects and not for purposes of limitation.

## Claims

1. A sodium ion adsorbent for removing sodium ions, including a compound represented by Chemical Formula 1.
[Chemical Formula 1] HₓM₁₋ₓAlSi₂O₆
in Chemical Formula 1,
M is one or more elements selected from Na, K, Cs, and Rb, and 0<x≤1.

2. The sodium ion adsorbent of claim 1, wherein:
the adsorbent selectively adsorbs sodium ions in a solution.

3. The sodium ion adsorbent of claim 1, wherein:
an average particle diameter (D50) of the adsorbent is within a range of 10 µm to 300 µm.

4. A method for manufacturing a sodium ion adsorbent including a compound represented by Chemical Formula 1, the method comprising:
obtaining an adsorbent by subjecting a mineral to a multistage treatment; and
separating the obtained adsorbent.
[Chemical Formula 1] HₓM₁₋ₓAlSi₂O₆
in Chemical Formula 1,
M is one or more elements selected from Na, K, Cs, and Rb, and 0<x≤1.

5. The method of claim 4, wherein:
the obtaining an adsorbent by subjecting a mineral to a multistage treatment comprises:
obtaining a first solid by heat-treating the mineral at a high temperature;
obtaining a second solid by treating the obtained first solid with an acid; and
subjecting the obtained second solid to a cleaning treatment.

6. The method of claim 5, wherein:
the obtaining a first solid by heat-treating the mineral at a high temperature is
performed at a temperature ranging from 1000°C to 1200°C.

7. The method of claim 5, wherein:
the obtaining a second solid by treating the obtained first solid with an acid comprises
mixing the first solid with an acid, and
is performed at a temperature ranging from 150°C to 300°C.

8. The method of claim 5, wherein:
the obtaining a second solid by treating the obtained first solid with an acid comprises
mixing the first solid with an acid, and
the acid is mixed within a range of 10 wt% to 40 wt% based on a weight of the first solid.

9. The method of claim 5, wherein:
the subjecting the obtained second solid to a cleaning treatment comprises:
a water cleaning treatment; and
a base cleaning treatment and

10. A method for removing sodium ions, the method comprising:
adding an adsorbent including a compound represented by Chemical Formula 1 to a sodium ion-containing solution;
adsorbing sodium ions to the adsorbent while stirring the solution with the adsorbent added thereto; and
separating the sodium ion adsorbent with the sodium ions adsorbed thereto from the solution.
[Chemical Formula 1] HₓM₁₋ₓAlSi₂O₆
in Chemical Formula 1,
M is one or more elements selected from Na, K, Cs, and Rb, and
0<x≤1.

11. The method of claim 10, wherein:
the adsorbing sodium ions to the sodium ion adsorbent while stirring the solution with the adsorbent added thereto is performed
at a temperature ranging from 30°C to 95°C.

12. The method of claim 10, wherein:
in the adsorbing sodium ions to the sodium ion adsorbent while stirring the solution with the adsorbent added thereto,
pH of the solution with the adsorbent added thereto is 7 or higher.
